(19) Europäisches Patentamt
European Patent Office
Office européen des brevets

(11) **EP 2 488 847 B1**

(12) **FASCICULE DE BREVET EUROPEEN**

(45) Date de publication et mention
de la délivrance du brevet:
**15.11.2017 Bulletin 2017/46**

(21) Numéro de dépôt: **10765440.2**

(22) Date de dépôt: **14.10.2010**

(51) Int Cl.:
***G01N 15/14*** *(2006.01)*

(86) Numéro de dépôt international:
**PCT/EP2010/065382**

(87) Numéro de publication internationale:
**WO 2011/045360 (21.04.2011 Gazette 2011/16)**

(54) **PROCÉDÉ DE DÉTECTION OPTIQUE D'OBJETS MICROMÉTRIQUES EN SOLUTION**

VERFAHREN ZUR OPTISCHEN DETEKTION GELÖSTER MIKROMETRISCHER OBJEKTE

METHOD FOR OPTICALLY DETECTING DISSOLVED MICROMETRIC OBJECTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2009 FR 0904966**

(43) Date de publication de la demande:
**22.08.2012 Bulletin 2012/34**

(73) Titulaire: **Commissariat à l'Énergie Atomique
et aux Énergies Alternatives
75015 Paris (FR)**

(72) Inventeur: **ALLIER, Cédric
F-38000 Grenoble (FR)**

(74) Mandataire: **Bréda, Jean-Marc et al
Marks & Clerk France
Conseils en Propriété Industrielle
Immeuble " Visium "
22 Avenue Aristide Briand
94117 Arcueil Cedex (FR)**

(56) Documents cités:
WO-A2-2007/131945     FR-A1- 2 887 983
FR-A5- 2 192 708       US-A1- 2002 198 928
US-A1- 2007 273 867

• JUNG-YEUL JUNG ET AL: "behaviour of particles in an evaporating didisperse colloid droplet on a hydrophilic surface", ANALYTICAL CHEMISTRY, vol. 81, 1 octobre 2009 (2009-10-01), pages 8256-8259, XP002582596,
• TITTU THOMAS NELLIMOOTTIL ET AL: "evaporation-induced patterns from droplets containing motile and non-motile bacteria", LANGMUIR (AMERICAN CHEMICAL SOCIETY), vol. 23, no. 17, 7 décembre 2007 (2007-12-07), pages 8655-8658, XP002582542,
• SUNGKYUO SE ET AL: "Lensfree holographic imaging for on-chip cytometry and diagnostic", LAB CHIP (ROYAL SOCIETY OF CHEMISTRY), vol. 9, 5 décembre 2008 (2008-12-05), pages 777-787, XP002582445, cité dans la demande
• TH. KLUPSCH ET AL: "the distribution of a macromolecular solute within an evaporating drop: an exact analytical solution", COLLOID AND SURFACES (ELSEVIER), vol. 231, 12 décembre 2003 (2003-12-12), pages 85-102, XP002582591,

## Description

Le domaine de l'invention est celui des dispositifs et des procédés de détection en imagerie de contact pour le diagnostic et l'analyse biologique.

Dans le domaine de l'imagerie optique pour le diagnostic biologique, si l'on se restreint à la détection spécifique, hors imagerie de contact, deux types de méthodes sont principalement utilisées. Ce sont la « cytométrie en flux » et l'imagerie moléculaire de fluorescence.

La cytométrie en flux est une technique puissante qui permet de compter, de caractériser et de classer les différentes cellules qui coupent le faisceau lumineux d'un laser. En analysant les figures de diffraction, il est possible de déterminer les dimensions de la cellule. Des mesures de fluorescence permettent en outre de distinguer les différentes familles de bactéries. L'inconvénient de cette technique est qu'elle nécessite une instrumentation coûteuse et complexe. Un autre inconvénient est un angle solide de balayage relativement faible, limitant le champ d'investigation.

L'imagerie moléculaire de fluorescence est une méthode largement utilisée en diagnostic biologique en raison de sa très grande efficacité. La sensibilité des mesures en fluorescence est celle des évènements discrets : à l'aide de marqueurs fluorescents, il est possible de détecter en microscopie des molécules individuelles. Pour obtenir de bons résultats, il est nécessaire de parfaitement séparer l'énergie qui excite les molécules fluorescentes appelée énergie d'« excitation » de celle émise par celles-ci, appelée énergie d'« émission ». Si d'excellents filtres existent aujourd'hui, ceux-ci imposent un conditionnement des faisceaux lumineux, en particulier une faible ouverture des faisceaux. Par conséquent, les systèmes optiques de mise en oeuvre de cette méthode sont complexes et volumineux. L'imagerie de fluorescence nécessite également l'ajout préalable d'un fluorophore dans le milieu à analyser, ce qui rend le procédé invasif.

Aussi, on cherche à remplacer ces techniques complexes et coûteuses par des dispositifs d'imagerie de contact, ayant un champ d'observation étendu et non invasifs.

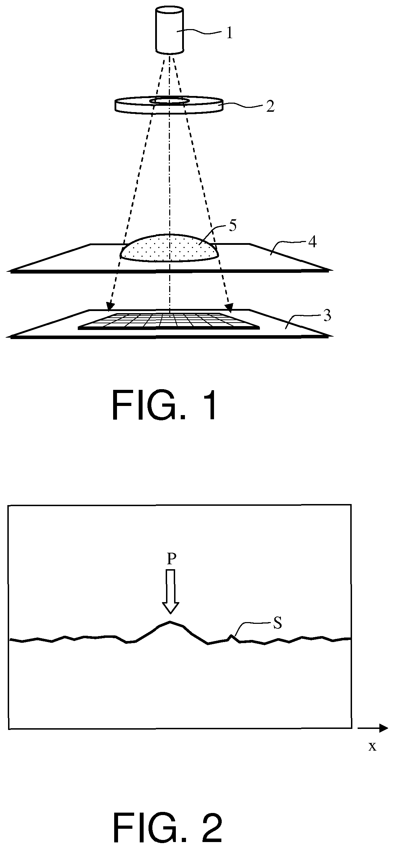

Ces techniques se développent de plus en plus car elles permettent de détecter des cellules, des bactéries ou plus généralement des particules de taille micrométrique sans avoir recours aux systèmes optiques évolués précédents. Un dispositif d'imagerie de contact est représenté schématiquement en figure 1. Ce dispositif comporte une source d'éclairage 1, pouvant être une source de petite dimension, par exemple une diode électroluminescente, un diaphragme 2 permettant de limiter l'ouverture de la source et un imageur ou capteur 3 qui peut être une matrice de photosites, matrice de type « CCD », signifiant « Charge-Coupled Device » ou « CMOS », signifiant « Complementary Metal Oxide Semiconductor ». De tels imageurs comportent généralement des microlentilles associées à chaque photosite. Le diaphragme 2 n'est pas indispensable, mais son utilisation est avantageuse. On vient insérer entre cette matrice 3 et la source de lumière 1, une lame transparente 4 de type lame de microscope portant l'objet de l'étude 5.

Cet objet est une solution comportant des particules micrométriques, ces particules pouvant être des particules biologiques telles des cellules ou des bactéries ou d'autres particules telles des micro-billes. La goutte analysée repose sur la lame transparente 4 et son ménisque est au contact du gaz ambiant, ce gaz pouvant être de l'air. La matrice 3 est reliée à un système d'affichage et/ou de traitement d'images, non représenté sur la figure 1. La distance séparant la diode 1 de la lame porte-objet 4 est de préférence supérieure à 1 centimètre, et peut être, par exemple, de quelques cm, typiquement comprise entre 2 et 5 centimètres. La distance séparant l'objet de la surface du capteur est comprise entre 0,1 et 2 millimètres. Bien qu'on parle d'imagerie de contact, l'objet de l'étude n'est pas situé au contact direct du capteur, mais à la distance précédemment indiquée. La lame est constituée d'un matériau transparent tel la Silice, le quartz, et son épaisseur varie entre quelques dizaines de micromètres et 1 millimètre. Ce dispositif très simple, sans optique de grossissement peut constituer, dans certains cas, une alternative aux méthodes conventionnelles de comptage optique telles que la cytométrie en flux, la microscopie optique haute résolution ou les techniques d'imagerie moléculaire de fluorescence.

Depuis quelques années, plusieurs équipes ont obtenu des résultats impressionnants en imagerie de contact. Ainsi, une équipe de l'université américaine UCLA (University of California, Los Angeles) utilise l'imagerie de contact pour détecter et identifier des bactéries. Cette méthode est décrite dans la publication suivante « Lensfree holographie imaging for on-chip cytometry and diagnostics » de Sungkyu Seo and al. parue dans «The Royal Society of chemistry» - Dec. 5, 2008 - 2009, 9, 777-787. Dans les dispositifs décrits dans cette publication, les bactéries sont placées dans un liquide entre deux plaques, l'ensemble étant posé sur une matrice de photosites. Un éclairage monochromatique est filtré par un diaphragme de 100 microns de diamètre pour obtenir une bonne cohérence spatiale. On obtient ainsi au niveau de la matrice de photosites une figure de diffraction pour chaque cellule immergée. Selon les auteurs, les figures de diffraction obtenues sont suffisamment résolues et distinctes d'une espèce à l'autre pour permettre un comptage spécifique des différentes bactéries.

La méthode proposée par l'équipe de l'université UCLA est élégante. Elle présente cependant un inconvénient. Elle nécessite l'utilisation de capteurs CCD haute sensibilité nécessairement coûteux. Ainsi, les capteurs utilisés sont des capteurs CCD haute sensibilité de marque « Kodak » et de référence « Kodak Kai-10002 ». D'autres exemples de l'état de la technique sont "behaviour of particles in an evaporating didisperse colloid droplet on a hydrophilic surface" de Jung-Yeul et al parue dans "Anal. Chem", Vol. 81, N° 19, 1 Octobre 2009. Dans ce document bien que la détection soit réalisée pendant l'évaporation de la goutte de liquide, le moyen optique utilisé comporte une optique de grossissement. Si l'on utilise des capteurs standards, tels des capteurs CMOS ou des CCD à bas coût, il est encore possible d'observer des figures de diffraction pour différents particules micrométriques de 1 micromètre de diamètre telles que des billes de Silanol, des billes de Latex ou des bactéries de type Escherichia Coli. Par contre, l'efficacité de détection est très faible, au mieux de l'ordre du %.. La figure 2 représente ainsi le signal S obtenu sur un axe x du capteur passant par le centre d'une particule P. Le signal S représente ici le niveau de gris mesuré par différents pixels selon l'axe des ordonnées, les pixels constituant l'axe des abscisses: il s'agit d'un profil. On voit que le rapport signal sur bruit est très faible, à peine suffisant pour permettre la détection de la particule.

Le procédé selon l'invention ne présente pas ces inconvénients. Il permet, en effet, dans un dispositif à imagerie de contact, de détecter des particules de taille micrométrique sans avoir recours à des capteurs haute sensibilité. La caractéristique principale du procédé selon l'invention est de réaliser la mesure ou les mesures pendant ou après la phase d'évaporation de la goutte de liquide dans laquelle se trouvent les particules micrométriques (bactéries, cellules, billes ...) à détecter. Ainsi, contrairement aux mesures de l'art antérieur, la goutte n'est pas disposée entre deux plaques. De plus, la goutte doit être au contact d'un gaz, par exemple de l'air, afin que l'évaporation puisse avoir lieu. On a en effet constaté que la détection était beaucoup efficace au cours ou à la suite de l'évaporation.

Plus précisément, l'invention a pour objet un procédé de détection optique de particules tel que défini dans la revendication 1. La goutte peut être placée soit sur une lame, située au contact ou à une faible distance de l'imageur. La goutte peut également être placée directement au contact de l'imageur.

Avantageusement, ledit procédé comporte au moins une seconde étape de détection réalisée après l'évaporation de la goutte de liquide.

Avantageusement, la détection est réalisée en périphérie de la goutte, à l'interface séparant la goutte de sa partie évaporée.

Avantageusement, ledit procédé comporte une succession d'étapes de détection réalisées à intervalles de temps réguliers pendant et/ou après l'évaporation de la goutte, chaque étape de détection permettant de mesurer la répartition de particules ou d'organismes se trouvant dans un plan donné, ledit plan étant à une distance de la matrice de photosites dépendant du temps d'évaporation, l'ensemble desdites répartitions de particules ou d'organismes obtenues permettant de reconstituer une répartition tridimensionnelle des particules ou des organismes dans la goutte initiale avant évaporation.

Avantageusement, le liquide est de l'eau ou, dans lorsque les particules à détecter sont des bactéries, un tampon biologique, par exemple du « TRIS », abréviation de trishydroxyméthylaminométhane. Selon un mode de réalisation préféré, le liquide comporte un agent mouillant, par exemple le TWEEN 20, abréviation de polyoxyethylene (20) sorbitan monolaurate.

Enfin, le support qui est soit une lame transparente ou la surface du capteur portant la goutte de liquide peut être fonctionnalisée. Il peut également être rendu hydrophile. Il peut également être refroidi en dessous de la température ambiante.

L'invention sera mieux comprise et d'autres avantages apparaîtront à la lecture de la description qui va suivre donnée à titre non limitatif et grâce aux figures annexées parmi lesquelles :

La figure 1 représente un dispositif en imagerie de contact ;
La figure 2 représente le signal de détection obtenu avec une matrice à photosites à faible sensibilité ;
La figure 3 représente le principe du procédé de détection selon l'invention ;
La figure 4 représente un signal de détection obtenu avec une matrice à photosites à faible sensibilité en utilisant le procédé selon l'invention ;
La figure 5 représente des étapes de détection successives mettant en oeuvre le procédé selon l'invention ;
Les figures 6 représentent des représentations d'observations de bactéries dans une goutte de tampon salin, ainsi que dans un film résultant de l'évaporation de la goutte. Les profils (6a et 6d) représentent l'intensité détectée en fonction de la position le long d'un axe horizontal x ;
Les figures 7 représentent des représentations d'observations de bactéries dans une goutte de tampon salin, avant et après évaporation, la goutte étant déposée sur une lame hydrophile ou hydrophobe. Les courbes 7a et 7c représentent l'intensité détectée en fonction du temps, en un point situé niveau de la goutte ;
Les figures 8 représentent l'image d'une particule de polystyrène de diamètre 500 nm, ainsi qu'un profil horizontal selon un axe X de cette image.

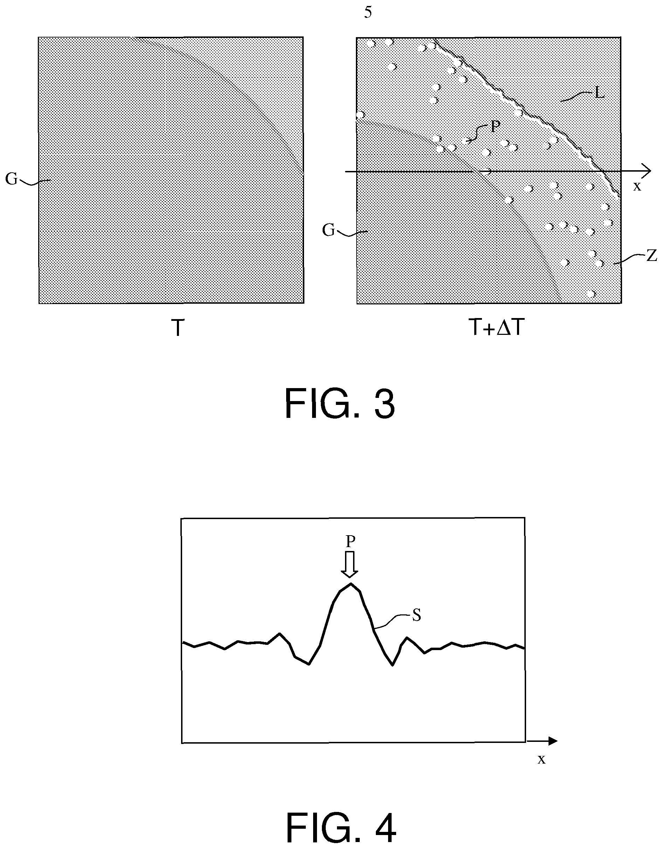

Comme on l'a vu, l'utilisation d'un capteur de faible sensibilité ne permet pas d'obtenir des rapports signal sur bruit élevés. Le procédé selon l'invention permet d'augmenter considérablement le rapport signal sur bruit et par conséquence l'efficacité de détection. Les systèmes de détection selon l'art antérieur détectent les micro-particules ou les micro-organismes au sein même d'une goutte de liquide. Or, tant que les particules sont immergées, elles sont difficilement discernables, sauf à utiliser un capteur à haute sensibilité. Ainsi, la vue de gauche de la figure 3 représente, au temps T, l'image issue d'une vue partielle d'une goutte G comportant des particules P. Cette image est issue d'un capteur d'un dispositif à imagerie de contact tel que précédemment décrit. Les particules ne sont pas discernables si le capteur a une sensibilité trop faible.

Or, lorsque la goutte de liquide s'évapore, les particules, bactéries ou billes micrométriques apparaissent très clairement au niveau de l'interface air/liquide, et plus particulièrement lorsque la particule se trouve dans le ménisque de la goutte. Ainsi, la vue de droite de la figure 3 représente, au temps T+ΔT, l'image d'une vue partielle de la goutte G précédente partiellement évaporée. Les particules P apparaissent clairement dans la zone Z de la goutte qui s'est évaporée. La partie située dans le coin supérieur droit, désignée par la lettre L, correspond à la lame non initialement recouverte de la solution.

La figure 4 représente ainsi le profil du signal S obtenu sur un axe x du capteur passant par le centre d'une particule P. On voit que le rapport signal sur bruit est maintenant suffisant pour permettre la détection de la particule. Le rapport signal sur bruit représenté est suffisant pour envisager une détection d'une grande partie des cellules immergées. Il est de l'ordre de quelques dizaines de %. Cette méthode est reproductible. Le procédé selon l'invention est donc très simple à mettre en oeuvre. Il consiste essentiellement à réaliser des mesures pendant l'évaporation de la goutte de liquide. Une mesure ou une étape de détection consiste essentiellement à enregistrer les signaux détectés par les photosites de l'imageur du dispositif en imagerie de contact et à analyser leur amplitude.

L'explication physique de cette augmentation de contraste des particules éclairées pendant l'évaporation est complexe. Comme il l'est montré dans la description qui suit des exemples expérimentaux, cette augmentation peut être attribuée à la formation d'un fin film résiduel recouvrant la particule, ce film subsistant quelque temps après l'évaporation de la goutte. Selon les propriétés de mouillabilité du liquide constituant la goutte sur la lame supportant la goutte, ce film est éphémère et disparaît en quelques secondes, voire moins ou ce film est durable et subsiste plusieurs secondes, voire quelques dizaines de secondes ou minutes. Il semble que la présence de ce film résiduel, recouvrant la particule, fasse office de microlentille et permette ainsi une détection des bactéries avec un rapport signal sur bruit étonnamment élevé. En effet, l'intensité du signal est maximum lorsque la particule se trouve au niveau de la ligne d'évaporation et triple que celui au niveau du ménisque de la goutte.

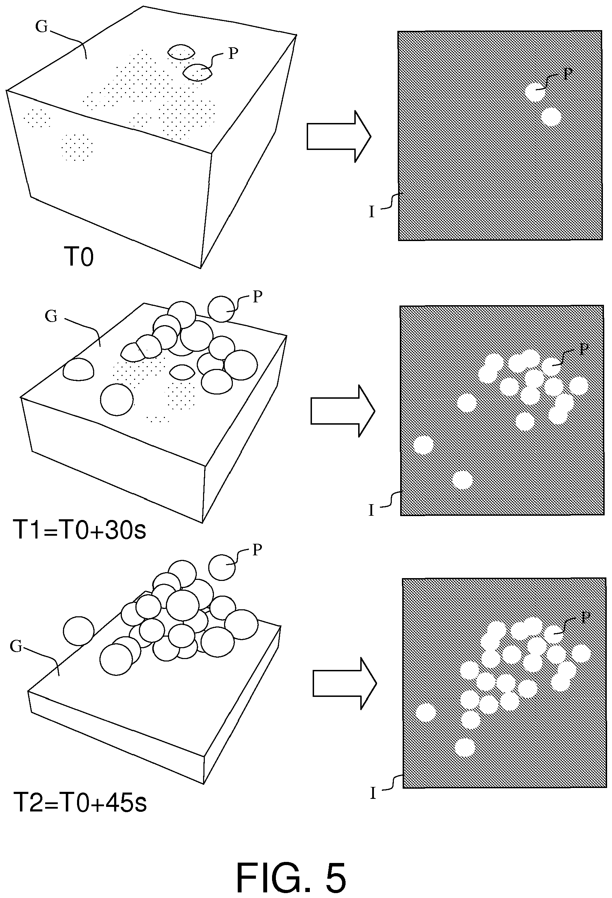

Dans certaines conditions, il est possible que lorsqu'une goutte s'évapore, elle diminue essentiellement de hauteur, l'évaporation se produisant du haut de la goutte vers le bas et non pas du bord de la goutte vers le centre. Cela se produit, par exemple, lorsque la lame est inclinée de quelques degrés. On peut mettre à profit cet effet pour reconstituer une répartition tridimensionnelle des particules ou des organismes dans la goutte initiale avant évaporation. Il suffit pour cela de réaliser une succession d'étapes de détection réalisées à intervalles de temps réguliers pendant l'évaporation de la goutte. Chaque étape de détection permet de mesurer la répartition de particules ou d'organismes se trouvant dans un plan donné, ledit plan étant à une distance de la matrice de photosites dépendant du temps d'évaporation, l'ensemble desdites répartitions de particules ou d'organismes obtenues permettant de reconstituer une répartition tridimensionnelle des particules ou des organismes dans la goutte initiale avant évaporation. La figure 5 illustre ce principe. Sur cette figure, on a représenté à trois temps différents de l'évaporation d'une goutte comportant des particules, d'une part une vue tridimensionnelle d'une portion de la goutte et d'autre part l'image correspondante issue du détecteur matriciel du dispositif à imagerie de contact. Il est à noter que les vues tridimensionnelles ne sont pas représentatives des dimensions réelles des gouttes et de leur répartition. Au temps To, seules deux particules émergent de la goutte et sont identifiables sur l'image issue du détecteur. Elles sont représentées par des cercles blancs. Au temps T1, après 30 secondes d'évaporation, un plus grand nombre de particules émergent et sont identifiables sur l'image issue du détecteur. Enfin, Au temps T2, après 45 secondes d'évaporation, l'évaporation est pratiquement achevée, toutes les particules émergent et sont identifiables sur l'image issue du détecteur. Ainsi, à partir des différentes images successives prises aux instants To, T1, T2, ..., il devient possible de connaître la répartition tridimensionnelle des particules au sein de la goutte.

Il est possible, si l'on souhaite maîtriser parfaitement le procédé, de contrôler l'évaporation au moyen de diodes infrarouges, ou de résistances chauffantes ou d'un souffle de gaz atteignant le ménisque de la goutte. Des moyens de chauffage peuvent également être intégrés dans le substrat. Il s'agit par exemple de lames de quartz sur lesquelles on dépose une couche mince d'ITO (Indium Tin Oxyde : oxyde d'indium et de tungstène), ce dépôt pouvant alors former une résistance électrique. Pour donner des ordres de grandeur, selon la taille de la goutte, le liquide utilisé et les conditions expérimentales, le temps d'évaporation d'une goutte dure de quelques secondes à quelques dizaines de secondes, le volume de la goutte étant compris entre 1 microlitre et 20 microlitre, voire au-delà.

Différents liquides comme le TRIS, abréviation de trishydroxyméthylaminométhane ou l'eau purifiée peuvent être utilisés. Le TRIS présente l'avantage d'être une solution saline permettant de préserver les bactéries quelques jours. Il est donc couramment utilisé en tant que tampon biologique. Il est préférable que la lame qui porte la goutte ne soit pas trop hydrophobe, voire hydrophile, comme on le montrera ultérieurement. Le procédé fonctionne avec différents types de particules. On citera, à titre d'exemples, les billes de Silanol de 1 micromètre de diamètre, les billes de Latex de 1 micromètre de diamètre et des bactéries. Des essais concluants ont été réalisés sur des bactéries de type Escherichia Coli ou Bacillus Subtilus. Il fonctionne dans une grande gamme de concentrations, d'une particule par goutte jusqu'à cent mille particules par goutte.

Il est bien entendu préférable que l'éclairage venant de la source soit le plus homogène possible. Autrement dit, la surface du ménisque est éclairée selon une intensité sensiblement égale en chaque point. Il est également préférable que l'éclairage ait une certaine cohérence spatiale, c'est-à-dire que le diaphragme disposé devant la source soit de petites dimensions. On peut, par exemple, utiliser un diaphragme de 100 micromètres de diamètre.

Le dispositif d'acquisition est simple et peu coûteux puisqu'il ne comprend qu'une carte électronique d'acquisition des images numériques venant des photosites d'un capteur de type « CCD » bas coût ou « CMOS » pour caméra de type « webcam », une diode électroluminescente, un diaphragme et une lamelle de verre. Les pixels ou photosites du capteur peuvent avoir des dimensions moyennes, de l'ordre de deux à dix microns. Ces capteurs ont un prix bien plus faible que celui des capteurs haute sensibilité où la taille des pixels n'excède pas deux microns. Il s'agit de capteurs CMOS ou de CCD à faible coût.

Il est possible, pour améliorer la détection, d'utiliser des lames de verres dites « fonctionnalisées » au moyen d'anticorps pour isoler les bactéries spécifiquement du milieu bactérien. On peut alors détecter et identifier les bactéries détectées, l'identification étant réalisée selon la fonctionnalisation de la lame.

Des essais de détection ont été réalisés en utilisant un dispositif tel que présenté sur la figure 1. La source de lumière 1 est une diode électroluminescente de puissance 1.7 W émettant à une longueur d'onde centrée autour de 555 nm (Modèle K1Luxeon III de la marque Luxeon, marque déposée). Elle est placée à une distance de 10 cm en dessus du substrat 4. Ce dernier est une lame de microscope, en verre, de surface 70 mm x 25 mm et d'épaisseur 0.15 mm. Le capteur 3 est un capteur CMOS comprenant 800 x 600 pixels, la dynamique étant de 8 bits. La dimension de chaque pixel est de 3 $\mu$m x 3 $\mu$m. Ce capteur a été retiré d'une webcam (modèle Talkcam 200 de marque V gear). Afin de placer le substrat 4 au plus près du photodétecteur 3, la membrane plastique recouvrant ce détecteur a été retirée.

On dépose un échantillon, d'un volume d'environ 1 $\mu$l, d'un échantillon liquide sur le substrat 4 face au capteur 3. On laisse alors la goutte s'évaporer, durant une durée de quelques minutes. Dans l'expérience, la solution utilisée est un tampon salin 10 mM TRIS HCl de pH égal à 8. De préférence, on peut ajouter 0.1 % en volume de polysorbate 20 (polyoxyethylene (20) sorgitan monolaurate), connu sous le nom commercial TWEEN 20.

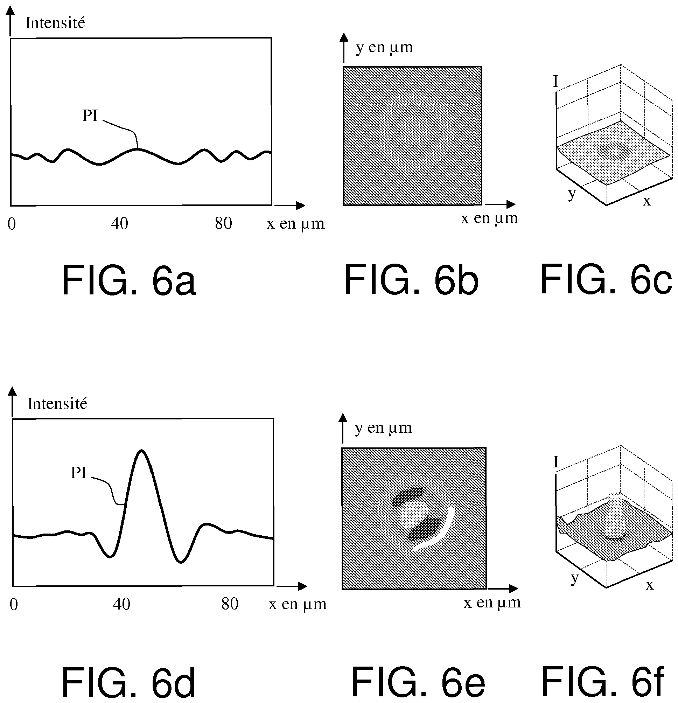

Les figures 6a, 6b et 6c montrent respectivement un profil horizontal PI, une image et une représentation en trois dimensions de ladite image obtenue lorsque l'échantillon est illuminé par un faisceau lumineux rendu spatialement cohérent en plaçant un diaphragme,

de diamètre 100 $\mu$m, entre la source de lumière et l'échantillon liquide. De cette façon, on cherche à observer une tâche de diffraction produite par la bactérie présente dans la goutte. Le volume de la goutte est de l'ordre du $\mu$l.

On observe alors une tâche de diffraction holographique, telle que décrite dans le document de S. Su Seo "Lensless holographic imaging for on-chip cytometry and diagnostics", Lab Chip 9 (6), 777-87 (2009).

Les figures 6d, 6e et 6f montrent respectivement un profil horizontal PI, une image et une représentation en trois dimensions de la dite image obtenue lorsque l'échantillon est illuminé par la même source, sans le diaphragme. Avant de réaliser ces images, on a attendu que la goutte s'évapore. Le substrat étant suffisamment hydrophile, lorsque la goutte s'évapore, il reste un film mouillant recouvrant le substrat et les bactéries déposées sur ce dernier. Ce film subsiste d'autant plus longtemps que le substrat est hydrophile, et que la solution de l'échantillon est mouillante et présente une tension de surface faible : on parle alors de formation d'un film ultra-mouillant.

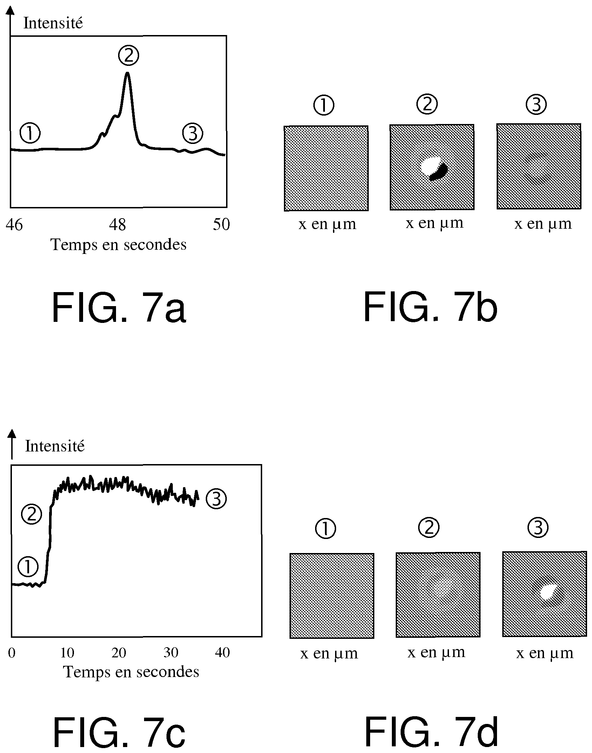

La configuration mise en oeuvre durant l'essai est favorable, puisqu'on utilise une lame hydrophile, dans le cas présent un verre ayant subi un lavage aux ultrasons et un rinçage à l'éthanol et le tampon biologique précédemment décrit rendu mouillant par l'adjonction d'un agent mouillant (0,1 % de TWEEN). On constate que selon une telle configuration, comme cela est illustré dans les figures 7, le film ultra-mouillant formé suite à l'évaporation de la goutte se maintient longtemps : quelques minutes, voire plusieurs heures.

Les figures 6d, 6e et 6f sont à comparer respectivement aux figures 6a, 6b et 6c. On voit que le rapport signal sur bruit obtenu en réalisant une image de contact de la bactérie recouverte d'un film mouillant est augmenté d'un facteur 20 par rapport à une image de contact de la bactérie baignant dans la goutte. Cela permet une détection sans ambiguïté de cette bactérie.

La formation d'un film, résultant de l'évaporation de la solution, est un des points clef du procédé selon l'invention. Un tel film joue le rôle d'une ou plusieurs microlentilles formées au dessus de la bactérie. Cela explique qu'on puisse détecter cette dernière avec un rapport signal sur bruit aussi élevé, de l'ordre de 45.

Dans ces exemples, le rapport signal sur bruit (SNR) est défini comme suit :

$$SNR = \frac{\max\{I\} - \mu}{\sigma}$$

avec :

- I = amplitude de chaque pixel de l'image ;
- $\mu$ = moyenne de l'amplitude des pixels dans une zone considérée comme représentative du bruit ;
- $\sigma$ = écart type de l'amplitude des pixels dans une zone considérée comme représentative du bruit.

Lorsque la goutte s'évapore, on observe la formation d'un tel film à la surface de la bactérie. Selon la solution utilisée, et notamment ses propriétés de mouillabilité et de tension de surface, le film subsiste plus ou moins longtemps. Pour estimer l'épaisseur de ce film, on réalise des essais en plaçant des billes de polymère de différents diamètres. On observe alors que, lorsque le diamètre excède 5μm, le film se rompt systématiquement. Aussi, on considère que l'épaisseur de ce film est inférieure à quelques μm, voire 5 μm. La rupture du film formé à la surface du substrat se détecte aisément en réalisant des images avec le dispositif précédemment décrit, et schématisé dans la figure 1.

On réalise deux essais en utilisant le tampon précédemment décrit d'une part sur un substrat hydrophobe, d'autre part sur un substrat hydrophile, vis-à-vis de la solution tampon utilisée. Par hydrophobe et hydrophile, on entend que l'angle d'une goutte au contact de ce substrat est respectivement inférieur et supérieur à 90°, cette définition étant communément admise.

Les figures 7a et 7b illustrent les résultats obtenus lorsque le substrat est hydrophobe. La figure 7a montre l'évolution temporelle d'un profil horizontal de l'image de la bactérie représentée en figure 7b, le profil passant par le centre de l'image de la bactérie. Pour t < 48s (figure 7b-1), la goutte s'évapore et aucun signal significatif n'est détecté. Entre t = 48 s et t = 49s, l'évaporation de la goutte conduit à la formation éphémère d'un film recouvrant la bactérie (figure 7b-2). On observe bien une augmentation du signal, correspondant à l'effet de la formation de ce film sur la bactérie. Le substrat étant hydrophobe, le film disparaît rapidement, ce qui explique la décroissance rapide de l'intensité du signal observée pour t > 48,5s (figure 7b-3).

Les figures 7c et 7d illustrent les résultats obtenus lorsque le substrat supportant la goutte est hydrophile. La figure 7c montre l'évolution temporelle d'un profil horizontal P de l'image de la bactérie représentée en figure 7d, le profil passant par le centre de l'image de la bactérie. Pour t < 7 s, la goutte s'évapore et aucun signal significatif n'est détecté (figure 7d-1). Le temps t = 7s correspond ou la bactérie n'est recouverte que du film fin (figure 7d-2). Le substrat étant hydrophile, le film subsiste longtemps à la surface du substrat et de la bactérie (figure 7d-3). Ainsi, on observe un signal d'intensité importante sur une durée bien plus importante que dans le cas précédent, la durée étant ici de quelques dizaines de secondes. Après évaporation complète de la goutte, le film disparaît et on ne détecte plus la bactérie.

Ces figures confirment que le procédé selon l'invention permet une détection d'une bactérie en solution au moment ou la goutte contenant la bactérie s'évapore, et notamment lorsque l'interface goutte / milieu extérieur se trouve au niveau de la bactérie, c'est-à-dire au moment ou la bactérie n'est recouverte que d'un film fin. En fonction de la mouillabilité de la solution, la formation du film est soit éphémère (durée inférieure à 1 ou 2s), soit durable. Plus la solution est mouillante sur le substrat considéré, plus la formation du film est durable. Par durable, on entend quelques dizaines de secondes, voire quelques minutes ou plusieurs heures.

Ainsi, lorsqu'on souhaite obtenir un film durable, il est préférable d'ajouter un agent mouillant dans la solution. Un agent de ce type est par exemple le TWEEN 20 précédemment défini, dont la concentration (en volume) est de 0,1 %.

La solution choisie pour le tampon lors des essais était le Tris HCI PH = 8 dilué à 10mM dans de l'eau distillée, des résultats particulièrement satisfaisants ayant été obtenus pour ce type de tampon. Tris est l'abréviation de trishydroxyméthylaminométhane, ou 2-amino-2-hydroxyméthyl-1,3-propanediol.

D'autres tampons peuvent être utilisés. Lorsqu'on souhaite identifier des bactéries, on préférera des tampons biologiques maintenant les bactéries vivantes. L'ajout d'un agent mouillant, tel le tween, s'avère généralement très utile et permet la formation d'un microfilm plus durable. La concentration volumique d'un tel agent est par exemple de l'ordre de quelques centièmes de % à quelques %, préférentiellement quelques centièmes de % à quelques dixièmes de % Parmi les autres tampons utilisables, on peut citer le PBS (Phosphate Buffer Saline), ou, hors utilisation biologique, l'eau distillée.

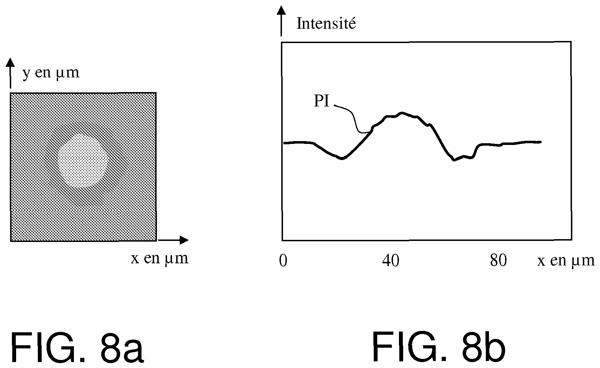

Les exemples précédents ont décrit l'observation de bactéries. Mais l'invention peut s'appliquer à l'observation de particules ou d'objets biologiques de taille inférieure à celle des bactéries. La figure 8 représente une image (figure 8a) et un profil PI (figure 8b) de l'observation d'une bille de polystyrène, recouverte d'un film ultra-mouillant formé consécutivement à l'évaporation d'une goutte du même tampon salin que celui décrit dans les exemples précédents. Le diamètre de cette bille est de 500 nm. Le rapport signal sur bruit de la détection demeure élevé (de l'ordre de 20).

Par ailleurs, en refroidissant le support de la goutte en dessous de la température ambiante, l'évaporation de la goutte est ralentie, et le film résiduel est plus durable. Par exemple, lorsque la température ambiante est de 20°, le support peut être porté à une température comprise entre 5 à 10°.

On peut alors également utiliser un imageur refroidi, ce qui permet d'augmenter le rapport signal sur bruit du signal détecté.

Concernant les applications industrielles du procédé selon l'invention, on citera, à titre d'exemples non limitatifs :

- Le contrôle de la qualité de l'air, en terme de charge bactérienne et fongique, des milieux hospitaliers, pharmaceutiques ou agro-alimentaires ;
- La mesure ou l'aide au diagnostic pour les études précliniques qui portent sur les micro-organismes, la biologie cellulaire et les pathologies ;
- Des mesures de concentrations de particules biologiques réalisées sur des fluides corporels.

On citera également, à titre d'exemple, le diagnostic bactériologique des infections urinaires. L'examen bactériologique des urines permet d'affirmer l'infection urinaire quand il montre la présence d'une bactériurie monomicrobienne (une seule espèce de bactérie) avec un nombre de colonies supérieur à 100 bactéries/$\mu$l, associée à une leucocyturie (présence de globules blancs dans les urines) supérieur à 10 leucocytes/$\mu$l ou une pyurie.

De telles mesures peuvent être effectuées facilement avec le procédé selon l'invention.

**Revendications**

1. Procédé de détection optique de particules ou d'organismes de taille micrométrique ou sub-micrométrique au moyen d'un dispositif à imagerie de contact ne comportant pas d'optique de grossissement, lesdites particules (P) ou organismes étant immergés dans une goutte (G) de liquide, la détection étant réalisée au moyen d'une matrice de cellules photosensibles ou photosites la goutte de liquide étant disposée sur une lame transparente intercalée entre une source de lumière et la matrice de cellules photosensibles, ledit procédé comportant au moins une première étape de détection réalisée pendant l'évaporation de la goutte de liquide, lorsqu'un film de liquide résiduel recouvre la particule ou l'organisme, ledit film faisant office de micro-lentille, ladite étape de détection se faisant avant la disparition dudit film.

2. Procédé de détection optique selon la revendication 1, **caractérisé en ce que** la distance entre la goutte de liquide et la matrice de cellules photosensibles est comprise entre 0.1 mm et 2 mm.

3. Procédé de détection optique selon la revendication 1, **caractérisé en ce que** ledit procédé comporte au moins une seconde étape de détection réalisée après l'évaporation de la goutte de liquide.

4. Procédé de détection optique selon la revendication 1, **caractérisé en ce que** la détection est réalisée en périphérie de la goutte, à l'interface (Z) séparant la goutte de sa partie évaporée.

5. Procédé de détection optique selon l'une des revendications précédentes, **caractérisé en ce que** ledit procédé comporte une succession d'étapes de détection réalisées à intervalles de temps réguliers pendant l'évaporation de la goutte.

6. Procédé de détection optique selon la revendication 5, **caractérisé en ce que** chaque étape de détection permet de mesurer la répartition de particules ou d'organismes se trouvant dans un plan donné, ledit plan étant à une distance de la matrice de photosites dépendant du temps d'évaporation, l'ensemble desdites répartitions de particules ou d'organismes obtenues permettant de reconstituer une répartition tridimensionnelle des particules ou des organismes dans la goutte initiale avant évaporation.

7. Procédé de détection optique selon l'une des revendications précédentes, **caractérisé en ce que** le liquide est de l'eau ou du « Tris », abréviation de trishydroxyméthylaminométhane.

8. Procédé de détection optique selon l'une des revendications précédentes, **caractérisé en ce que** la lame de verre portant la goutte de liquide est fonctionnalisée.

**Patentansprüche**

1. Verfahren zur optischen Erfassung von Partikeln oder Organismen von mikrometrischer oder sub-mikrometrischer Größe mittels einer Kontaktbildgebungsvorrichtung, die keine Vergrößerungsoptik umfasst, wobei die Partikel (P) oder Organismen in einen Flüssigkeitstropfen (G) eingetaucht werden, wobei die Erfassung mittels einer Matrix lichtempfindlicher Zellen oder Photosites durchgeführt wird, wobei der Flüssigkeitstropfen auf einer zwischen einer Lichtquelle und der Matrix lichtempfindlicher Zellen eingeschobenen transparenten Folie angeordnet wird, wobei das Verfahren mindestens einen während der Verdunstung des Flüssigkeitstropfens durchgeführten ersten Erfassungsschritt aufweist, wenn ein Restflüssigkeitsfilm die Partikel oder Organismen bedeckt, wobei der Film als Mikrolinse dient, wobei der Erfassungsschritt vor dem Verschwinden des Films erfolgt.

2. Verfahren zur optischen Erfassung nach Anspruch 1, **dadurch gekennzeichnet, dass** der Abstand zwischen dem Flüssigkeitstropfen und der Matrix lichtempfindlicher Zellen zwischen 0,1 mm und 2 mm liegt.

3. Verfahren zur optischen Erfassung nach Anspruch 1, **dadurch gekennzeichnet, dass** das Verfahren mindestens einen nach der Verdunstung des Flüssigkeitstropfens durchgeführten zweiten Erfassungsschrüt umfasst.

4. Verfahren zur optischen Erfassung nach Anspruch 1, **dadurch gekennzeichnet, dass** die Erfassung am Umfang des Tropfens an der Grenzfläche (Z), die den Tropfen von seinem verdunsteten Teil trennt, durchgeführt wird.

**5.** Verfahren zur optischen Erfassung nach einem der vorhergehenden Ansprüche, **dadurch gekennzeichnet, dass** das Verfahren eine Aufeinanderfolge von in regelmäßigen Zeitintervallen während der Verdunstung des Tropfens durchgeführten Erfassungsschritten umfasst.

**6.** Verfahren zur optischen Erfassung nach Anspruch 5, **dadurch gekennzeichnet, dass** jeder Erfassungsschritt die Verteilung der Partikel oder Organismen zu messen erlaubt, die sich in einer gegebenen Ebene befinden, wobei die Ebene sich in einem Abstand von der Photositematrix befindet, der von der Verdunstungszeit abhängt, wobei die Gesamtheit der Verteilungen der dargestellten Partikel oder Organismen eine dreidimensionale Verteilung der Partikel oder der Organismen in dem Anfangstropfen vor einer Verdunstung nachzubilden erlaubt.

**7.** Verfahren zur optischen Erfassung nach einem der vorhergehenden Ansprüche, **dadurch gekennzeichnet, dass** die Flüssigkeit aus Wasser oder "Tris" besteht, Abkürzung für Trishydroxymethylaminomethan.

**8.** Verfahren zur optischen Erfassung nach einem der vorhergehenden Ansprüche, **dadurch gekennzeichnet, dass** die Glasplatte, die den Flüssigkeitstropfen trägt, funktionalisiert ist.

**Claims**

**1.** Process for optical detection of particles or organisms of micrometric size or sub-micrometric size using a contact imaging device which does not comprise an optical magnifying unit, the particles (P) or organisms being immersed in a liquid droplet (G), the detection being carried out using a matrix of photosensitive cells or photosites, the liquid droplet being arranged on a transparent slide which is interposed between a light source and the matrix of photosensitive cells, the process comprising at least a first detection step carried out during the evaporation of the liquid droplet when a film of residual liquid covers the particle or the organism, the film acting as a micro-lens, the detection step being carried out before the disappearance of the film.

**2.** Process for optical detection according to claim 1, **characterised in that** the distance between the liquid droplet and the matrix of photosensitive cells is between 0.1 mm and 2 mm.

**3.** Process for optical detection according to claim 1, **characterised in that** the process comprises at least a second detection step which is carried out after the evaporation of the liquid droplet.

**4.** Process for optical detection according to claim 1, **characterised in that** the detection is carried out at the periphery of the droplet, at the interface (Z) separating the droplet from the evaporated portion thereof.

**5.** Process for optical detection according to any one of the preceding claims, **characterised in that** the process comprises a succession of detection steps carried out at regular time intervals during the evaporation of the droplet.

**6.** Process for optical detection according to claim 5, **characterised in that** each detection step allows the distribution of particles or organisms located in a given plane to be measured, the plane being at a distance from the matrix of photosites which depends on the evaporation time, all of the distributions of particles or organisms obtained allowing a three-dimensional distribution of the particles or the organisms in the initial droplet to be reconstructed before evaporation.

**7.** Process for optical detection according to any one of the preceding claims, **characterised in that** the liquid is water or "Tris", an abbreviation of tri s(hydroxymethyl)aminomethane.

**8.** Process for optical detection according to any one of the preceding claims, **characterised in that** the glass slide which carries the liquid droplet is functionalised.

# FIG. 1

# FIG. 2

FIG. 3

FIG. 4

G

P

T0

P

I

G

P

P

I

T1=T0+30s

P

G

P

I

T2=T0+45s

# FIG. 5

FIG. 6a

FIG. 6b

FIG. 6c

FIG. 6d

FIG. 6e

FIG. 6f

Intensité

②

①          ③

46          48          50
Temps en secondes

# FIG. 7a

①          ②          ③

x en μm    x en μm    x en μm

# FIG. 7b

Intensité

②          ③
①

0    10    20    30    40
Temps en secondes

# FIG. 7c

①          ②          ③

x en μm    x en μm    x en μm

# FIG. 7d

FIG. 8a

FIG. 8b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SUNGKYU SEO.** Lensfree holographie imaging for on-chip cytometry and diagnostics. *The Royal Society of chemistry,* 05 Décembre 2008, vol. 9, 777-787

- **JUNG-YEUL et al.** behaviour of particles in an evaporating didisperse colloid droplet on a hydrophilic surface. *Anal. Chem,* 01 Octobre 2009, vol. 81 (19
- **S. SU SEO.** Lensless holographic imaging for on-chip cytometry and diagnostics. *Lab Chip,* 2009, vol. 9 (6), 777-87